Europäisches Patentamt

(19) European Patent Office

Office européen des brevets

(11) Publication number: **0 048 058**
**B1**

# (12) EUROPEAN PATENT SPECIFICATION

(45) Date of publication of patent specification: **02.01.85**

(21) Application number: **81200994.2**

(22) Date of filing: **08.09.81**

(51) Int. Cl.⁴: **C 08 J 3/00,** C 08 J 3/22,
C 08 L 55/02

(54) **Process for the production of a plastic object.**

(30) Priority: **16.09.80 NL 8005166**

(43) Date of publication of application:
**24.03.82 Bulletin 82/12**

(45) Publication of the grant of the patent:
**02.01.85 Bulletin 85/01**

(84) Designated Contracting States:
**AT BE CH DE FR GB IT LI NL SE**

(56) References cited:
**FR-A-1 568 688**
**FR-A-2 084 156**
**FR-A-2 322 881**

(73) Proprietor: **STAMICARBON B.V.**
**Postbus 10**
**NL-6160 MC Geleen (NL)**

(72) Inventor: **Dunning, Leslie Granthem William**
**Tuulshoek 38**
**NL-6093 CR Heijthuijsen (NL)**
Inventor: **De Warrimont, Jean Pierre Leon Marie**
**Noel**
**Past. Stassenstraat 5**
**NL-6243 BW Geulle (NL)**

(74) Representative: **Hatzmann, Marinus Jan et al**
**OCTROOIBUREAU DSM P.O.Box 9**
**NL-6160 MA Geleen (NL)**

The file contains technical information
submitted after the application was filed and
not included in this specification

Courier Press, Leamington Spa, England.

## Description

The invention relates to a process for the production of an object from a granular ABS polymer composition, said composition comprising:

I  10—100 parts by weight of one or more graft copolymers obtained by polymerizing a mixture of one or more unsaturated nitriles and one or more vinylaromatic compounds in the presence of a rubber,

II  0—90 parts by weight of a copolymer of one or more unsaturated nitriles and one or more vinylaromatic compounds, and

III  0—20 parts by weight of one or more additives,

in which process the polymer composition is melted, homogenized, and extruded or injection moulded into an object.

For a great many objects such as piping for drainage, water supply, air heating and the like metal is ousted to an increasing extent by plastics. A type of plastic very widely used for piping especially for sewer piping, is polyvinylchloride (PVC). For a number of pipe uses it is impossible, however, to use PVC, because either the strength or the heat resistance is insufficient.

In the automotive industry this replacement also occurs to an increasing extent especially because the cost and the weight advantage of the plastic are important.

ABS is a type of plastic widely used in the automotive industry when PVC either lacks strength or heat resistance. With ABS high standards in respect of impact resistance, rigidity, heat resistance and colour consistency can be imposed.

ABS is mostly a graft copolymer obtained by polymerizing a mixture of styrene and acrylonitrile in the presence of a rubber, such as polybutadiene, SBR and the like. Usually the ABS polymer composition contains a quantity of copolymer of styrene and acrylonitrile prepared separately.

It is customary in the preparation of ABS-polymer compositions for the producer of the composition first to mix all components, such as graft copolymer(s), copolymer(s), additives and pigment, and then to homogenize and granulate the final composition.

This granulate will then be melted by the processor and be processed to form moulded products by means of extrusion or injection moulding.

In principle an ABS polymer composition is hardly ever processed into moulded objects direct from its constituent parts.

There are two important reasons for it. The first is that objects made from an ABS-polymer composition must always comply with very stringent colour and mechanical property specifications, so that every lot is specially made to order.

The second reason is that for the processing of ABS into moulded objects which meet the required high standards in respect of the surface and of other properteis special equipment is required in connection with the mixture of the various components and the homogeneity of the product.

Moreover, the feeding of the components of the polymer composition to the extruder or the injection moulding equipment requires special provisions.

It is an object of the invention to provide a process for the production of an object from an ABS-polymer composition in which process an object is obtained meeting the usual, stringent specifications, without using the pre-prepared granulate, but starting with the separate components comprising the polymer composition.

It is a further object of the invention to provide a process wherein the flow properties of the mixture introduced into the feed of the extruder or injection moulding equipment is improved.

It is an even further object of the invention to provide a process in which the throughput of the extruder or injection moulding equipment is increased over the conventional processes.

These and further objects of the invention are realised by the measures taken according to the invention which is characterized in that said granular composition has a particle size distribution with at least two peaks, and that the ratio between the diameters at said peaks exceeds 1.5, and preferably exceeds 2.

Usually the ratio between the diameter at said peaks does not exceed 75 because above this value there may be a risk of segregation of the mixture.

In this connection it is observed that all particle size distributions or averages given, are by weight.

In a preferred embodiment, said granular polymer composition is obtained by mixing at least two components chosen from the group of

A. a granular polymer having an average particle size of between 60 and 250 $\mu$m;

B. a granular polymer having an average particle size of between 200 and 500 $\mu$m and

C. a granular polymer having an average particle size of over 1000 $\mu$m, where either each of A, B and C may correspond (separately) to the components I, II or III, or at least one of them may be the sum of two or three of the components I, II and III.

More in particular none of the components is present in a quantity exceeding 99.5 wt.%.

Preferably

0,5—99,5 wt.% of particle size range A
0,5—99,5 wt.% of particle size range B and
0,5—99,5 wt.% of particle size range C
are used.

Preferably the quantity of A (if present) is between 2.5 and 80 wt.%, the quantity of B (if present) is between 2.5 and 80 wt.% and the quantity of C (if present) is between 2.5 and 80 wt.%. Surprisingly it has been found that, in applying the process according to the invention, it is possible to prepare objects, such as pipe or automotive parts, direct from the constituents of the polymer composition.

In a preferred embodiment of the process according to the invention, a mixture is used of more than 50 wt.% of a granular graft copolymer I having an average particle size of between 75 and 200 $\mu$m and 50 wt.% or less of a granular copolymer II having an average particle size of between 200 and 450 $\mu$m. More specifically at least 10 wt.% of said copolymer II having a particle size of between 200 and 500 $\mu$m is present.

In another preferred embodiment, the quantity of granular polymer having an average particle size of over 1000 $\mu$m exceeds 2.5 wt.%. This polymer can advantageously be a masterbatch of one or more additives or pigments in a polymer.

Usually the average particle size of the granular polymer having an average particle size of over 1000 $\mu$m does not exceed 5000 $\mu$m. A preferred range is from 2000 to 4000 $\mu$m.

The quantity of granular polymer having an average particle size of between 60 and 250 $\mu$m is preferably not less than 10 wt.%.

The constituents of the polymer composition can be fed to the extruder or injection moulding equipment in the form of a 'premix' or as separate feed streams.

Usually the feed of the extruder or the injection moulding equipment is provided with a hopper optionally containing a crammer-feeder. Consequently it is possible to feed the polymer composition as a premix of all constituents to said hopper. This premix can be prepared in the usual way by blending together all constituents.

If a premix is used, it is preferably prepared immediately prior to said feeding to the hopper.

It is also possible to feed all constituents separately to the hopper. In that case there are two or more feed streams into the hopper, which feed streams are mixed by homogenizing in the extruder or injection-moulding equipment.

If at least two separate feed streams are introduced into the hopper and extruder or into the injection moulding equipment it is quite possible that one or more of the said streams is in fact a premix of two or more of the constituents. For example, in a preferred embodiment the granular polymer having an average particle size of over 1000 $\mu$m may be a masterbatch of one or more additives, optionally including pigments.

It is also possible to feed a premix of said masterbatch with one or more polymers having a smaller average particle size, for example an average particle size in the region of 60 to 250 $\mu$m and/or a particle size in the region of 200 to 500 $\mu$m.

The mixture is preferably prepared immediately before the melting and homogenizing, because otherwise there will be a risk of the mixture clogging the feed. This mixing can be performed in a Henschel (RTM)-type mixer or it can be done in the hopper over the feed opening of the extruder or injection moulding equipment.

In another preferred embodiment, of the process according to the invention the polymer composition fed to the extruder consists of a powder of the graft copolymer and of beads of the copolymer, optionally containing a minor quantity of masterbatch.

If separate feed streams are fed to the extruder or hopper the particle size distribution is calculated as if all components were mixed before feeding.

The process according to the invention is suitable for any kind of extruder or injection moulding equipment, such as single-screw-extruders, cascade extruders, double-screw-extruders and all kinds of injection moulding machines.

In the case of double-screw-extruder the main advantage of the invention lies in the increased throughput of the polymer composition, whereas in the other cases also the improvement in flow properties is very important.

In this connection it can be observed, that the use of a crammer feeder in the hopper to increase the quantity of polymer introduced into the melting zone of the extruder or injection moulding equipment is not necessary. In some cases, especially if the flow properties of the product are very bad, a crammer feeder may be useful.

The exact quantities of the components, i.e. graft copolymer, copolymer and additives to be used vary according to the required properties of the object.

The ABS polymer composition comprises 10—100 parts by weight of a graft copolymer, 0—90 parts by weight of a copolymer and 0—20 parts by weight of one or more additives.

The graft copolymer is prepared by polymerizing a monomer mixture in the presence of a rubber. The monomer mixture usually comprises one or more of the following components: styrene and/or derivatives of styrene, such as halogenated styrenes, and $\alpha$-methyl-styrene; acrylonitrile and/or methacrylonitrile; acrylates such as ethylacrylate, methylacrylate and methylmetacrylate; maleic anhydride.

As rubber the rubber suitable for the production of ABS can be used. Typical examples of these rubbers are polybutadiene, butadienestyrene rubber, butadiene-acrylonitrile rubber, acrylate rubber, ethylene-propylene or ethylene-propylene-diene rubber, ethylene-vinylacetate, and chloroprene rubber.

The graft copolymer can be prepared by the usual batch, semi-continuous or continuous polymerization techniques, such as emulsion, suspension, bulk, or solution polymerization. A combination of these techniques can also be used.

The copolymer can be prepared from the same monomer mixture as used in the graft copolymer. However, this is not necessary. Usually the monomers used for preparing the copolymer are chosen from the group used also for preparing the graft copolymer. The copolymer can be prepared using the techniques referred to above.

The polymer composition may contain the usual additives. These additives include antioxidants, UV-stabilisers, lubricants, fillers, antistatics, flame retardants, foaming agents and the like.

It is also possible to incorporate a quantity of one or more other polymers, such as polyvinylchloride, polyphenyloxide or polycarbonate, in the polymer composition.

The particle size of the granular polymer depends on the type of process. With an emulsion process the average particle size is about 60 to 400 $\mu$m, and with a suspension process the average particle size is between 200 and 800 $\mu$m. If granulate is used, the average particle size may range between 1000 and 6000 $\mu$m. If necessary for obtaining the required average particle size, it is possible to reduce the particle size by crushing or grinding.

The process according to the invention can be used for the production of all kinds of objects. Among these objects are pipes, plates, and profiles. These objects are in principle produced by extrusion or co-extrusion. It is also possible to produce foamed objects in this way.

Furthermore, extrusion or injection blow moulding techniques can be applied to prepare plastic objects.

Finally, it is possible to produce objects by injection-moulding techniques.

The invention is herein after elucidated on the basis of a number of examples.

Example I

Of a number of product mixtures the flow properties were prepared by measuring the time required for a fixed quantity of product introduced into a funnel to leave this funnel.

The following products were tested:

a. An emulsion graft copolymer of styrene and acrylonitrile on a butadiene-rubber, having an average particle size of approx. 160 $\mu$m.
b. A suspension copolymer of styrene and acrylonitrile having an average particle size of approx. 400 $\mu$m.
c. A mixture of 70 parts by weight of A and 30 parts by weight of B.

The results are given in the table.
Using the same products the same experiments were performed after mixing of the products with the usual additives (2 parts by weight).

The results are given in the table.

| Product | TABLE | |
|---|---|---|
| | Without additives dry flow (sec) | With additives dry flow (sec) |
| a | 26 | 16 |
| b | 2.5 | 2.5 |
| c | 16 | 10.5 |

From this table it follows clearly that there is a positive synergistic effect in the flow properties.

When fed to a hopper of a pipe extrusion line, the product A could not be processed to pipe due to problems with the feed, whereas the product C could be processed at high throughput rate without any problems.

Example II

A mixture of 96 parts by weight of an ABS-powder having an average particle size of approx. 120 $\mu$m and 4 parts by weight of a carbon black/additives masterbatch in a styrene-acrylonitrile copolymer, having an average particle size of 3000 $\mu$m was fed to a modified injection moulding machine.

The flow properties of the ABS powder were not very good (dry flow 40 sec), but there were no problems with the feeding of the machine. The objects could be produced at high speed. These objects had a homogeneous distribution of carbon black so that no segregation of powder and granulate had occurred.

**Claims**

1. Process for the production of an object from a granular ABS polymer composition, said composition comprising

I  10—100 parts by weight of one or more graft copolymers obtained by polymerizing a mixture of one or more unsaturated nitriles and one or more vinylaromatic compounds in the presence of a rubber,
II  0—90 parts by weight of a copolymer of one or more unsaturated nitriles and one or more vinylaromatic compounds, and
III  0—20 parts by weight of one or more additives,

wherein the polymer composition is molten, homogenized, and extruded or injection moulded into an object, characterized in that said granular composition has a particle size distribution with at least two peaks, and that the ratio between the diameters at said peaks exceeds 1.5.

2. Process according to claim 1, characterized in that said ratio exceeds 2.

3. Process according to claim 1 or 2, characterized in that said granular polymer composition is obtained by mixing at least two components chosen from the group of

A a granular polymer having an average particle size of between 60 and 250 $\mu$m;

B a granular polymer having an average particle size of between 200 and 500 $\mu$m and

C a granular polymer having an average particle size of over 1000 $\mu$m, where either each of A, B and C may correspond (separately) to the components I, II or III, or at least one of them may be the sum of two or three of the components I, II and III.

4. A process according to claim 3 characterized in that:

0.5—99.5 wt.% of particle size range A,

0.5—99.5 wt.% of particle size range B and

0.5—99.5 wt.% of particle size range C are used.

5. Process according to claim 3 or 4, characterized in that a mixture is used containing at least 50 wt.% of a granular graft copolymer I having an average particle size of between 75 and 200 $\mu$m and containing less than 50 wt.% of granular copolymer II having an average particle size of between 200 and 450 $\mu$m.

6. Process according to claim 3 or 4, characterized in that said mixture is prepared immediately prior to said melting and homogenizing.

7. Process according to claims 3—5, characterized in that at least 10% by weight of the granular copolymer having a particle size of between 200 and 500 $\mu$m is present.

8. Process according to claim 3, characterized in that at least 2.5% by weight of the granular polymer having an average particle size of over 1000 $\mu$m is used.

9. Process according to claims 3—8, characterized in that as granular polymer having an average particle size of over 1000 $\mu$m, a masterbatch of one or more additives in the copolymer or the graft copolymer is used.

10. Process according to claims 3—9, characterized in that the average particle size of the granular polymer having an average particle size of over 1000 $\mu$m does not exceed 5000 $\mu$m.

11. Process according to claim 10, characterized in that said size is between 2000 and 4000 $\mu$m.

12. Process according to claim 1, characterized in that said ratio does not exceed 75.

## Patentansprüche

1. Verfahren zur Herstellung eines Gegenstandes aus einem einer kornförmigen ABS-Polymerzusammensetzung bestehend aus

I 10—100 Masse-Teilen eines oder mehrerer Pfropfcopolymerer, erhalten durch Polymerisation eines Gemisches eines oder mehrerer ungesättigter Nitrile und einer oder mehrerer vinylaromatischer Verbindungen in Gegenwart eines Kautschuks,

II 0—90 Masse-Teilen eines Copolymers eines oder mehrerer ungesättigter Nitrile und einer oder mehrerer vinylaromatischer Verbindungen, und

III 0—20 Masse-Teilen eines oder mehrerer Zusätze, wobei die Polymerzusammensetzung geschmolzen, homogenisiert und zu einem Gegenstand stranggepreßt oder spritzgegossen wird, dadurch gekennzeichnet, daß die genannte kornförmige Zusammensetzung eine Teilchengrößenverteilung mit wenigstens zwei Peaks besitzt und das Verhältnis zwischen den Durchmessern an den genannten Peaks 1,5 übersteigt.

2. Verfahren nach Anspruch 1, dadurch gekennzeichnet, daß das genannte Verhältnis 2 übersteigt.

3. Verfahren nach Anspruch 1 oder 2, dadurch gekennzeichnet, daß die genannte kornförmige Polymerzusammensetzung erhalten wird, indem man wenigstens zwei Komponenten ausgewählt aus der Gruppe

A ein kornförmiges Polymer mit einer durchschnittlichen Teilchengröße zwischen 60 und 250 $\mu$m;

B ein kornförmiges Polymer mit einer durchschnittlichen Teilchengröße zwischen 200 und 500 $\mu$m und

C ein kornförmiges Polymer mit einer durchschnittlichen Teilchengröße über 1000 $\mu$m, wobei jede der Komponenten A, B und C (getrennt) den Komponenten I, II oder III entsprechen oder wenigstens eine hiervon die Summe von zwie oder drei der Komponenten I, II und III sein kann.

4. Verfahren nach Anspruch 3, dadurch gekennzeichnet, daß:

0,5—99,5 Masse-% des Teilchengrößenbereichs A,

0,5—99,5 Masse-% des Teilchengrößenbereichs B und

0,5—99,5 Masse-% des Teilchengrößenbereichs C eingesetzt werden.

5. Verfahren nach Anspruch 3 oder 4, dadurch gekennzeichnet, daß ein Gemisch enthaltend wenigstens 50 Masse-% eines kornförmigen Pfropfcopolymers I mit einer durchschnittlichen Teilchengröße zwischen 75 und 200 $\mu$m und enthaltend weniger als 50 Masse-% kornförmiges Copolymer II mit einer durchschnittlichen Teilchengröße zwischen 200 und 450 $\mu$m eingesetzt wird.

6. Verfahren nach Anspruch 3 oder 4, dadurch gekennzeichnet, daß das genannte Gemisch unmittelbar vor dem genannten Schmelzen und Homogenisieren hergestellt wird.

7. Verfahren nach den Ansprüchen 3—5, dadurch gekennzeichnet, daß wenigstens 10 Masse-% des granulatförmigen Copolymers mit einer durchschnittlichen Teilchengröße zwischen 200 und 500 μm zugegen sind.

8. Verfahren nach Anspruch 3, dadurch gekennzeichnet, daß wenigstens 2,5 Masse-% des kornförmigen Polymers mit einer durchschnittlichen Teilchengröße von mehr als 1000 μm eingesetzt werden.

9. Verfahren nach den Ansprüchen 3—8, dadurch gekennzeichnet, daß als kornförmiges Polymer mit einer durchschnittlichen Teilchengröße von mehr als 1000 μm ein Masterbatch von einem oder mehreren Zusätzen im Copolymer oder Pfropfcopolymer eingesetzt wird.

10. Verfahren nach den Ansprüchen 3—9, dadurch gekennzeichnet, daß die durchschnittliche Teilchengröße des kornförmigen Polymers mit einer durchschnittlichen Teilchengröße von mehr als 1000 μm nicht über 5000 μm liegt.

11. Verfahren nach Anspruch 10, dadurch gekennzeichnet, daß die genannte Teilchengröße zwischen 200 und 400 μm liegt.

12. Verfahren nach Anspruch 1, dadurch gekennzeichnet, daß das genannte Verhältnis 75 nicht übersteigt.

## Revendications

1. Procédé pour produire un objet à partir d'une composition de polymère ABS granulaire, ladite composition comprenant:

I  10 à 100 parties en poids d'un ou plusieurs copolymères greffés obtenus par polymérisation d'un mélange d'un ou plusieurs nitriles insaturés et d'un ou plusieurs composés vinylaromatiques en présence d'un caoutchouc,

II  0 à 90 parties en poids d'un copolymère d'un ou plusieurs nitriles insaturés et d'un ou plusieurs composés vinylaromatiques, et

III  0 à 20 parties en poids d'un ou plusieurs additifs,

dans lequel la composition polymère est fondue, homogénéisée et extrudée ou moulée par injection en un objet, caractérisé en ce que ladite composition granulaire a une distribution de la taille des particules avec au moins deux pics et en ce que le rapport entre les diamètres desdits pics est supérieur à 1,5.

2. Procédé selon la revendication 1, caractérisé en ce que ledit rapport est supérieur à 2.

3. Procédé selon la revendication 1 ou 2, caractérisé en ce que ladite composition de polymère granulaire est obtenue par mélange d'au moins deux composants choisis dans le groupe constitué par:

A.  un polymère granulaire ayant une taille moyenne des particules entre 60 et 250 μm;

B.  un polymère granulaire ayant une taille moyenne des particules entre 200 et 500 μm; et

C.  un polymère granulaire ayant une taille moyenne des particules supérieure à 1 000 μm, où soit chacum de A, B et C peut correspondre (séparément) aux composants I, II ou III, soit un d'entre eux peut être la somme de deux ou trois des composants I, II et III.

4. Procédé selon la revendication 3, caractérisé en ce qu'on utilise:

0,5—99,5 % en poids de la gamme des tailles des particules A,

0,5—99,5 % en poids de la gamme des tailles des particules B, et

0,05—99,5 % en poids de la gamme des tailles des particules C.

5. Procédé selon la revendication 3 ou 4, caractérisé en ce qu'on utilise un mélange contenant au moins 50% en poids d'un copolymère greffé granulaire I ayant une taille moyenne des particules entre 75 et 200 μm et contenant moins de 50% en poids de copolymères granulaire II ayant une taille moyenne des particules entre 200 et 450 μm.

6. Procédé selon la revendication 3 ou 4, caractérisé en ce que ledit mélange est préparé immédiatement avant ladite fusion et ladite homogénéisation.

7. Procédé selon les revendications 3 à 5, caractérisé en ce qu'au moins 10% en poids du copolymère granulaire ayant une taille des particules entre 200 et 500 μm sont présents.

8. Procédé selon la revendication 3, caractérisé en ce qu'on utilise au moins 2,5% en poids du polymère granulaire ayant une taille moyenne des particules supérieure à 1 000 μm.

9. Procédé selon les revendications 3 à 8, caractérisé en ce qu'on utilise comme polymère granulaire ayant une taille moyenne des particules supérieure à 1 000 μm un mélange-maître d'un ou plusieurs additifs dans le copolymère ou le copolymère greffé.

10. Procédé selon les revendications 3 à 9, caractérisé en ce que la taille moyenne des particules du polymère granulaire ayant une taille moyenne des particules supérieure à 1 000 μm ne dépasse pas 5 000 μm.

11. Procédé selon la revendication 10, caractérisé en ce que ladite taille est entre 2 000 et 4 000 μm.

12. Procédé selon la revendication 1, caractérisé en ce que ledit rapport ne dépasse pas 75.